# EUROPÄISCHE PATENTSCHRIFT

(11) **EP 2 933 164 B1**
(45) Veröffentlichungstag und Bekanntmachung des Hinweises auf die Patenterteilung: **12.01.2022**
(21) Anmeldenummer: 15160288.5
(22) Anmeldetag: 23.03.2015
(51) Int. Cl.: B60W 50/14, B60W 40/09, G07C 5/08

(54) **Informationsverfahren und Informationssystem für den Fahrer eines Kraftfahrzeugs**
Information method and information system for the driver of a motor vehicle
Procédé d'informations et système d'informations pour le conducteur d'un véhicule automobile

(30) Priorität: 08.04.2014 DE 102014206769
(43) Veröffentlichungstag der Anmeldung: 21.10.2015
(73) Patentinhaber: Volkswagen Aktiengesellschaft, 38440 Wolfsburg (DE)
(72) Erfinder: Alisch, Sebastian, 38102 Braunschweig (DE); Maus, Benjamin, 38102 Braunschweig (DE)

(56) Entgegenhaltungen:
- EP-A1- 1 811 481
- DE-A1-102005 044 771
- DE-A1-102006 047 311
- DE-A1-102010 011 088
- US-A1- 2009 284 361
- US-A1- 2013 135 092

## Beschreibung

Die vorliegende Erfindung betrifft ein Informationsverfahren für den Fahrer eines Kraftfahrzeugs. Ferner betrifft die Erfindung ein Informationssystem für den Fahrer eines Kraftfahrzeugs mit zumindest einem Fahrerassistenzsystem zum Erfassen sicherheitsrelevanter Parameter beim Fahren des Kraftfahrzeugs.

Es ist bekannt, Kraftfahrzeuge mit Fahrerassistenzsystemen auszustatten. Die Fahrerassistenzsysteme unterstützen den Fahrer beim Führen des Kraftfahrzeugs und erhöhen damit die Verkehrssicherheit. Beispielsweise können Fahrerassistenzsysteme das Kraftfahrzeug bei der Fahrt stabilisieren. Solche Fahrerassistenzsysteme können ein Antiblockiersystem, eine Antriebsschlupfregelung und eine Fahrdynamikregelung umfassen. Weitere Assistenzfunktionen betreffen die Bahnführung des Kraftfahrzeugs. Diese Assistenzfunktionen umfassen zum Beispiel eine Fahrgeschwindigkeitsregelung (adaptive cruise control, ACC), Frontalkollisionsschutzsysteme und einen Spurhalteassistenten (lane departure warning system, LDW). Diese Fahrerassistenzsysteme umfassen eine Vielzahl von Sensoren, mittels welchen die Umgebung des Kraftfahrzeugs und die Verkehrssituation erfasst und analysiert werden kann.

Normalerweise nimmt der Fahrer des Kraftfahrzeugs die Funktion der verschiedenartigen Fahrerassistenzsysteme nicht oder nur sehr selten wahr, da sie nur in sehr sicherheitskritischen Verkehrssituationen zum Einsatz kommen. Wenn solche Situationen nicht auftreten, erkennt der Fahrer nicht, dass die Fahrerassistenzsysteme dennoch fortwährend einen Beitrag zur Sicherheit beim Führen des Kraftfahrzeugs leisten. Dies ist nachteilig, da der Fahrer nicht die Unterstützung durch die Assistenzfunktionen einschätzen und bei der Fahrt bewerten kann.

Aus der EP 2 312 552 A2 ist ein Verfahren und ein System bekannt, mit dem der Fahrstil des Fahrers überwacht und analysiert werden kann. Dabei wird die Position des Fahrzeugs während der Fahrt überwacht. Gleichzeitig werden dem Fahrzeug zugeordnete Parameter überwacht und ein Fahrerprofil erzeugt, welches den Fahrstil des Fahrers kennzeichnet. Dem Fahrer kann dabei ein Bonus oder ein Malus in Abhängigkeit davon gegeben werden, wie sicher und/oder wie sparsam er fährt und wie viel Abgase er produziert.

Des Weiteren ist aus der DE 10 2010 027 221 A1 ein Kraftfahrzeug mit einem Display bekannt, auf dem verschiedene das Kraftfahrzeug betreffende Informationen angezeigt werden. Das Display ist in zwei Anzeigebereiche unterteilt. Dem einen Anzeigebereich sind positiv bewertete Bedienhandlungen des Fahrers des Kraftfahrzeugs zugeordnet, dem anderen Anzeigebereich sind negativ bewertete Bedienhandlungen des Fahrers zugeordnet. Unter den Bedienhandlungen des Fahrers werden insbesondere solche Bedienhandlungen verstanden, die den Kraftstoffverbrauch des Kraftfahrzeugs und/oder die Schadstoffemission des Kraftfahrzeugs negativ bzw. positiv beeinflussen.

Aus der DE 10 2009 023 867 A1 ist ein Verfahren zur Fahrerinformation in einem Kraftfahrzeug bekannt. Bei diesem Verfahren wird in einem Anzeigebereich einer Anzeigevorrichtung eine Information zum vergangenen Fahrverhalten des Fahrers wiedergegeben, wobei diese Information vermittelt, inwieweit eine Konformität eines ermittelten Fahrverhaltens des Fahrers mit einem Betriebsmodus vorliegt. Der Betriebsmodus repräsentiert dabei einen entsprechenden Fahrstil. Der Fahrstil kann dabei ressourcenschonend, dynamisch oder normal sein.

Die US 2013/135092 A1, die als Basis für die zweiteilige Anspruchsfassung dient, beschreibt ein Verfahren zum Analysieren eines Fahrverhaltens eines Fahrers. Dabei werden Daten zur Fahrsicherheit des Fahrers erfasst. Weiterhin werden die Daten analysiert und ein Fahrsicherheitssignal erzeugt. Das Fahrsicherheitssignal wird ausgegeben, so dass der Fahrer sein momentanes Fahrverhalten zeitnah beurteilen kann.

Die DE 10 2005 044771 A1 beschreibt eine Vorrichtung zur Bereitstellung von Informationen über eine Fahrzeugfahrt. Anhand von Bewertungsregeln wird ein Verkehrsgefährdungspotential bestimmt. Das Verkehrsgefährdungspotential wird dem Fahrer aktuell zur Verfügung gestellt Die DE 10 2006 047311 A1 beschreibt ein System zum Erhöhen der Fahrsicherheit eines Fahrzeugs. Dabei werden anhand der Daten und Signale der Sicherheits- und Assistenzsysteme des Fahrzeugs Fahrsicherheitsinformationen auf einer Anzeigeeinrichtung angezeigt. Dabei kann der Fahrer auch über sein Fahrverhalten der letzten 24 Stunden informiert werden.

Aus der EP 1 811 481 A1 ist ein Verfahren und ein System zum Überwachen und Analysieren eines Fahrstils eines Fahrers bekannt. Dabei wird der Fahrstil des Fahrers erfasst. Insbesondere kann der Fahrstil mittels eines Reisereports für eine bestimmte Zeit ausgegeben werden.

Die US 2009/284361 A1 beschreibt ein Bewertungssystem, mittels welchem ein Fahrstil eines Fahrers beurteilt wird. Dabei wird von einem Startwert von hundert Punkten ausgegangen. Für jedes unsichere Fahrmanöver werden Punkte abgezogen. Für jedes sichere Fahrmanöver werden Punkte hinzuaddiert. Die Punkte werden dem Fahrer dabei kontinuierlich angezeigt, so dass dieser sein Fahrverhalten einschätzen kann.

Schließlich ist aus der DE 102010 011088 A1 ein Verfahren zum Anzeigen von Informationen in einem Kraftfahrzeug bekannt, bei dem der Ist-Wert eines vom Betrieb des Kraftfahrzeugs abhängigen Parameters aufeinander folgend erfasst wird, ein Basiswert für diesen Parameter gespeichert ist und eine Anzeige eines graphischen Symbols in dem Kraftfahrzeug gestartet wird, wenn der Ist-Wert des Parameters den Basiswert unter- oder überschreitet. Das graphische Symbol vergrößert sich in Abhängigkeit von den erfassten Abweichungen des IstWerts des Parameters vom Basiswert.

Der vorliegenden Erfindung liegt die Aufgabe zugrunde, ein Informationsverfahren und ein Informationssystem der eingangs genannten Art bereitzustellen, mit welchen dem Fahrer des Kraftfahrzeugs Informationen zur Sicherheit beim Führen des Fahrzeugs bereitgestellt werden.

Erfindungsgemäß wird diese Aufgabe dadurch ein Informationsverfahren mit den Merkmalen des Anspruchs 1 und ein Informationssystem mit den Merkmalen des Anspruchs 10 gelöst. Vorteilhafte Ausgestaltungen und Weiterbildungen ergeben sich aus den abhängigen Ansprüchen.

Bei dem erfindungsgemäßen Informationsverfahren werden mittels zumindest eines Fahrerassistenzsystems sicherheitsrelevante Parameter beim Fahren des Kraftfahrzeugs erfasst. Aus den erfassten Parametern wird ein Sicherheitslevel bestimmt, der für ein Zeit- oder Streckenintervall angibt, wie sicher der Fahrer des Kraftfahrzeugs gefahren ist. Der aktuelle Sicherheitslevel wird dann angezeigt.

Durch die Anzeige des Sicherheitslevels wird dem Fahrer eine Rückmeldung für sein vergangenes Fahrverhalten so gegeben, dass er mittels einer angezeigten Kenngröße ein Maß an Sicherheit erkennen kann, welches sich aus den Parametern gegebenenfalls mehrerer Fahrerassistenzsysteme ergibt. Die Parameter werden insbesondere kontinuierlich erfasst und der Sicherheitslevel wird entsprechend kontinuierlich aktualisiert. Hierdurch wird dem Fahrer ferner die Funktionalität der Fahrerassistenzsysteme vermittelt, selbst wenn diese nicht aktiv oder durch Warnungen in das Fahrgeschehen eingreifen.

Als sicherheitsrelevanter Parameter kann beispielsweise der Abstand des Kraftfahrzeugs von anderen Verkehrsteilnehmern und/oder Objekten erfasst werden. Beispielsweise kann der Abstand erfasst werden, den das Kraftfahrzeug von einem vorausfahrenden Fahrzeug einhält. Ferner kann zum Beispiel bei einem Überholvorgang der seitliche Abstand zu dem Fahrzeug erfasst werden, welches überholt wird. Schließlich kann bei Einparkvorgängen erfasst werden, wie nahe das Kraftfahrzeug ruhenden Objekten kommt. Diese Abstandswerte haben eine Relevanz für die Sicherheit beim Führen des Fahrzeugs, da insbesondere bei zu geringen Abstandswerten die Gefahr einer Kollision mit einem anderen Verkehrsteilnehmer oder einem Objekt besteht. Die Abstandswerte werden bei der Bewertung der Relevanz für die Sicherheit gegebenenfalls in Verbindung mit weiteren Parametern wie beispielsweise der Geschwindigkeit oder Beschleunigung des Kraftfahrzeugs berücksichtigt.

Als sicherheitsrelevanter Parameter kann des Weiteren erfasst werden, ob der Fahrtrichtungsanzeiger bei einem Spurwechsel erfasst wurde. Ein Spurwechsel ohne Betätigung des Fahrtrichtungsanzeiger ist für die Sicherheit beim Führen des Kraftfahrzeugs relevant.

Des Weiteren wird als sicherheitsrelevanter Parameter der Füllstand von Betriebsflüssigkeiten erfasst. Beispielsweise ist das Fahren ohne Waschwasser, insbesondere für die Windschutzscheibe des Kraftfahrzeugs, für die Sicherheit beim Führen des Kraftfahrzeugs relevant. Ferner können Fehler eines Fahrzeugstatus erfasst werden und als sicherheitsrelevante Parameter berücksichtigt werden. Wenn zum Beispiel im Fahrzeugstatus angezeigt wird, dass die Bremsanlage fehlerhaft ist, ist ein Fahren mit dem Kraftfahrzeug trotz dieses Fehlers im Fahrzeugstatus für die Sicherheit beim Führen des Fahrzeugs relevant.

Des Weiteren können bei dem erfindungsgemäßen Verfahren für die Fahrt gültige Verkehrszeichen erfasst werden. Sodann kann als sicherheitsrelevanter Parameter das Befolgen bzw. das Nichtbefolgen der diesen Verkehrszeichen entsprechenden Regeln erfasst werden. Hierbei können beispielsweise die Geschwindigkeit des Kraftfahrzeugs oder etwaige Überholvorgänge berücksichtigt werden.

Gemäß einer weiteren Ausgestaltung des erfindungsgemäßen Informationsverfahrens wird die Dauer einer Fahrstrecke ermittelt, die ohne eine Pause zurückgelegt worden ist. Ein

Überschreiten einer bestimmten Höchstdauer kann dann als sicherheitsrelevanter Parameter erfasst werden. Alternativ oder zusätzlich kann die Müdigkeit des Fahrers durch Sensoren erfasst werden. Wird detektiert, dass der Fahrer einen Müdigkeitsschwellwert überschritten hat, ist dies für die Sicherheit beim Führen des Fahrzeugs relevant.

Schließlich kann als sicherheitsrelevanter Parameter erfasst werden, ob an einem Zebrastreifen stehende Fußgänger nicht beachtet worden sind, zu eng an Fußgänger herangefahren worden ist, der Fahrer oder einer der Mitfahrer ohne Anlegen des Sicherheitsgurtes gefahren ist oder die Fahrt mit einer nicht geschlossenen Tür durchgeführt wurde.

Die vorstehend genannten Parameter haben allesamt eine Relevanz für die Sicherheit beim Führen des Fahrzeugs. Erfindungsgemäß wird der Sicherheitslevel unter anderem in Verbindung mit diesen Parametern bestimmt, so dass vorteilhafterweise dem Fahrer eine realistische Anzeige dafür angezeigt wird, wie sicher er das Kraftfahrzeug gefahren ist.

Erfindungsgemäß werden mittels der Parameter Gefahrsituationen erfasst. Bei solchen Gefahrsituationen greifen Fahrerassistenzsysteme für die Sicherheit noch nicht notwendigerweise ein. Die erfassten Gefahrsituationen können jedoch bereits den Sicherheitslevel beeinflussen, so dass dem Fahrer die Funktion der Fahrerassistenzsysteme bereits dann veranschaulicht wird, wenn diese Assistenzsysteme noch nicht in das Fahrgeschehen eingreifen oder Warnungen ausgeben.

Bei dem erfindungsgemäßen Informationsverfahren wird insbesondere der Sicherheitslevel erhöht, wenn in einem Teilzeit- oder Teilstreckenintervall keine Gefahrsituationen erfasst worden sind. Der Sicherheitslevel wird somit kumulativ erhöht, wenn das Kraftfahrzeug bewegt wird, ohne dass Gefahrsituationen auftreten. Auch hierdurch wird dem Fahrer vorteilhafterweise die Funktion der Fahrerassistenzsysteme verdeutlicht.

Andererseits wird insbesondere der Sicherheitslevel erniedrigt, wenn in einem Teilzeit- oder Teilstreckenintervall eine Gefahrsituation erfasst worden ist. Vorteilhafterweise wird dem Fahrer hierdurch unmittelbar eine potentielle Gefährdung signalisiert, obwohl die Fahrerassistenzsysteme noch nicht notwendigerweise eine Warnung ausgegeben haben oder in das Fahrgeschehen eingegriffen haben.

Mittels der Parameter wird insbesondere die Größe der Gefahr einer Gefahrsituation erfasst. Das Maß der Erniedrigung des Sicherheitslevels hängt dann von der Größe der Gefahr einer erfassten Gefahrsituation ab. Vorteilhafterweise wird dem Fahrer hierdurch über den Sicherheitslevel eine realistische Anzeige gegeben, wie sicher er das Kraftfahrzeug führt.

Gemäß einer Ausgestaltung des erfindungsgemäßen Informationsverfahrens wird eine Veränderung des Sicherheitslevels durch eine Veränderung der Größe eines Symbols angezeigt. Mit zunehmendem Sicherheitslevel kann sich beispielsweise das Symbol vergrößern oder zunehmend ausfüllen. Ferner kann das Symbol mehrere Teilsymbole umfassen, wobei die Anzahl der angezeigten Teilsymbole mit zunehmendem Sicherheitslevel erhöht wird. Vorteilhafterweise wird hierdurch erreicht, dass dem Fahrer der Sicherheitslevel auf einfache und intuitive Weise visualisiert wird.

Für die Bestimmung des Zeit- oder Streckenintervalls, in dem der Sicherheitslevel bestimmt wird, gibt es verschiedene Möglichkeiten: Beispielsweise kann das Intervall mit den Starten des Motors und dem Losfahren des Kraftfahrzeugs beginnen und mit dem Anhalten und anschließendem Ausschalten des Motors enden. Das Intervall kann ferner einer Route eines Navigationssystems des Kraftfahrzeugs entsprechen. Das Intervall könnte außerdem den Zeitraum und die zurückgelegte Strecke zwischen zwei Tankvorgängen umfassen.

Wenn ein neues Intervall beginnt, wird der Sicherheitslevel insbesondere wieder auf den Ursprungswert rückgesetzt.

Des Weiteren kann die Person des Fahrers des Kraftfahrzeugs erfasst werden und der Sicherheitslevel fahrerspezifisch erfasst werden. Insbesondere wenn das Zeit- bzw. Streckenintervall Unterbrechungen umfasst, bei denen der Fahrer möglicherweise wechselt, ist es vorteilhaft, den Sicherheitslevel für jeden Fahrer gesondert zu führen.

Erfindungsgemäß wird ein Stehen des Kraftfahrzeugs erfasst und, wenn erfasst worden ist, dass das Kraftfahrzeug steht, werden dem Fahrer Informationen zu zumindest einer vergangenen erfassten Gefahrsituation ausgegeben. Erfindungsgemäß kann dem Fahrer hierdurch zeitnah vermittelt werden, wenn eine Gefahrsituation aufgetreten ist, und zwar selbst dann, wenn ein Fahrerassistenzsystem noch nicht in das Fahrgeschehen eingegriffen hat oder eine Warnung ausgegeben hat. In Verbindung mit den Informationen können auch Hinweise für eine verbesserte Fahrweise ausgegeben werden, um in Zukunft derartige Gefahrsituationen zu vermeiden. Hierdurch wird vorteilhafterweise dem Fahrer die Möglichkeit gegeben, sein Fahrverhalten zu verbessern.

Das erfindungsgemäße Informationssystem umfasst zumindest ein Fahrerassistenzsystem zum Erfassen sicherheitsrelevanter Parameter beim Fahren des Kraftfahrzeugs. Des Weiteren umfasst das Informationssystem eine Auswerteeinrichtung, die mit dem zumindest einen Fahrerassistenzsystem gekoppelt ist. Mittels der Auswerteeinrichtung ist ein Sicherheitslevel aus den erfassten Parametern bestimmbar, wobei der Sicherheitslevel für ein Zeit- oder Streckenintervall angibt, wie sicher der Fahrer das Kraftfahrzeug gefahren ist. Des Weiteren umfasst das erfindungsgemäße Informationssystem eine Anzeigevorrichtung, die mit der Auswerteeinrichtung gekoppelt ist. Mittels der Anzeigevorrichtung ist der aktuelle Sicherheitslevel anzeigbar.

Das erfindungsgemäße Informationssystem dient insbesondere dem Ausführen des erfindungsgemäßen Informationsverfahrens. Es weist daher dieselben Vorteile wie das erfindungsgemäße Informationsverfahren auf.

Das Fahrerassistenzsystem des erfindungsgemäßen Informationssystems umfasst insbesondere zumindest einen Sensor zum Erfassen des Abstands des Kraftfahrzeugs von anderen Verkehrsteilnehmern und/oder Objekten. Mittels der Auswerteeinrichtung ist in diesem Fall der Sicherheitslevel zumindest zum Teil aus den erfassten Abständen bestimmbar. Das Informationssystem greift somit vorteilhafterweise auf die zumeist ohnehin vorhandenen Sensoren eines Fahrerassistenzsystems zurück und bestimmt den Sicherheitslevel anhand der Messwerte dieser Sensoren.

Das Fahrerassistenzsystem kann des Weiteren zumindest einen Sensor zum Erfassen des Füllstands von Betriebsflüssigkeiten umfassen. Auch in diesem Fall wird mittels der Auswerteeinrichtung der Sicherheitslevel zumindest zum Teil aus den erfassten Füllständen bestimmt. Unter einem Fahrerassistenzsystem wird in dieser Schrift somit jedes System verstanden, welches den Fahrer in irgendeiner Weise beim Führen des Kraftfahrzeugs unterstützt. Hierzu gehört auch die Überwachung von Betriebsparametern des Kraftfahrzeugs.

Des Weiteren kann das Fahrerassistenzsystem eine Einheit zum Erfassen von für die Fahrt gültige Verkehrszeichen umfassen. Mittels der Auswerteeinheit ist in diesem Fall der Sicherheitslevel zumindest zum Teil aus den erfassten Verkehrszeichen bestimmbar. Für die Bestimmung des Sicherheitslevels werden in diesem Fall insbesondere weitere Parameter, wie beispielsweise die Geschwindigkeit des Fahrzeugs oder etwaige Überholvorgänge berücksichtigt. Auch diese können von dem Fahrerassistenzsystem erfasst werden.

Gemäß einer bevorzugten Weiterbildung des erfindungsgemäßen Informationssystems umfasst dieses eine Identifikationseinrichtung zum Erfassen der Person des Fahrers des Kraftfahrzeugs. Die Auswerteeinrichtung ist in diesem Fall so ausgebildet, dass der Sicherheitslevel fahrerspezifisch erfasst wird. Vorteilhafterweise ist es in diesem Fall möglich, dass für verschiedene Fahrer verschiedene Sicherheitslevel bestimmt werden. Da sich die Fahrweisen der Fahrer normalerweise unterscheiden, kann jeder Fahrer für sich selbst anhand des Sicherheitslevels erfahren, wie sicher er das Kraftfahrzeug in der Vergangenheit geführt hat.

Die Erfindung wird nun anhand eines Ausführungsbeispiels mit Bezug zu den Zeichnungen erläutert.

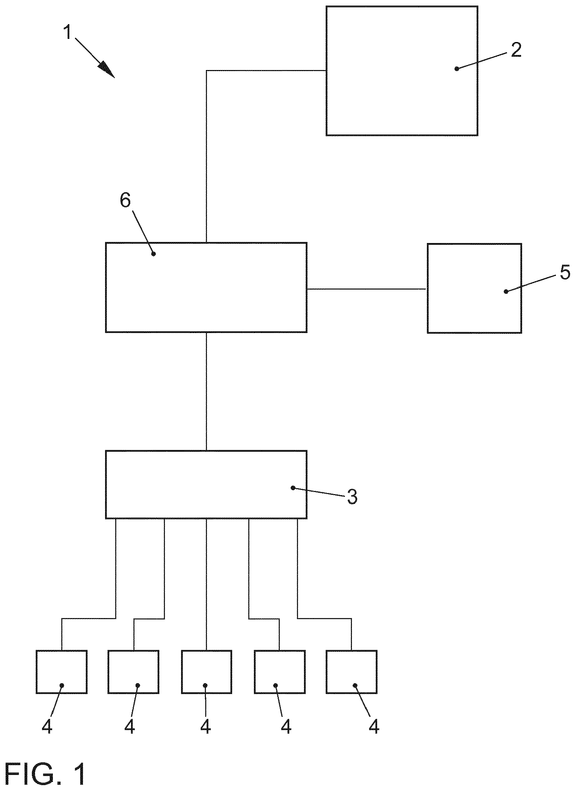

- Figur 1: zeigt schematisch den Aufbau eines Ausführungsbeispiels des erfindungsgemäßen Informationssystems und
- Figuren 2 bis 7: zeigen Anzeigen, die von Ausführungsbeispielen des erfindungsgemäßen Verfahrens erzeugt worden sind.

Das erfindungsgemäße Informationssystem 1 umfasst eine Anzeigevorrichtung 2, die beispielsweise im Kombiinstrument oder in der Mittelkonsole des Kraftfahrzeugs angeordnet sein kann. Des Weiteren umfasst das Informationssystem 1 ein Fahrerassistenzsystem 3. Dieses Fahrerassistenzsystem 3 kann sich gegebenenfalls aus einer Vielzahl von Teilassistenzsystemen zusammensetzen. Das Fahrerassistenzsystem 3 ist mit einer Vielzahl von Sensoren 4 gekoppelt. Mittels der Sensoren 4 kann unter anderem das Folgende erfasst werden:
Es wird mittels eines oder mehrerer Sensoren 4 der Abstand des Kraftfahrzeugs von anderen Verkehrsteilnehmern und Objekten erfasst. Bei den hierfür verwendeten Sensoren 4 handelt es sich zum Beispiel um Radarsensoren, Infrarotsensoren und optische Sensoren, deren Messdaten von dem Fahrerassistenzsystem 3 ausgewertet werden, um die entsprechenden Abstände zu berechnen.

Die Sensoren 4 erfassen des Weiteren den Füllstand von Betriebsflüssigkeiten des Kraftfahrzeugs. Zu diesen Betriebsflüssigkeiten gehören des Waschwasser für die Windschutzscheibe und die Heckscheibe, das Motoröl und Getriebeöl, das Kühlwasser und die Bremsflüssigkeit sowie gegebenenfalls noch weitere Flüssigkeiten, die eine Relevanz für die Sicherheit beim Führen des Fahrzeugs haben.

Die Sensoren 4 umfassen des Weiteren eine Kamera, welche Bilder von der Umgebung des Kraftfahrzeugs aufnimmt. Mittels einer Auswertung der Bilder der Kamera kann das Fahrerassistenzsystem 3 für die Fahrt gültige Verkehrszeichen erkennen und andere Verkehrsteilnehmer, wie zum Beispiel Fußgänger und Radfahrer, in der Nähe des Kraftfahrzeugs erfassen.

Mittels der Sensoren 4 kann des Weiteren erkannt werden, ob Fehler im Fahrzeugstatus vorliegen. Derartige Fehler sind zum Beispiel in den Steuergeräten des Kraftfahrzeugs gespeichert.

Mittels der Sensoren 4 wird des Weiteren erkannt, ob eine Person auf einen Sitzplatz des Kraftfahrzeugs sitzt und ob diese Person den Sicherheitsgurt angelegt hat. Des Weiteren wird mittels der Sensoren 4 erkannt, ob eine Tür oder eine Klappe des Kraftfahrzeugs geöffnet oder geschlossen ist.

Das Informationssystem 1 umfasst des Weiteren eine Identifikationseinrichtung 5, mittels der die Person des Fahrers des Kraftfahrzeugs erfasst werden kann. Beispielsweise kann über die Identifikationseinrichtung 5 der Fahrer gegebenenfalls mittels eines Codes seine Identität eingeben. Das Erfassen des Fahrers kann jedoch auch auf andere Weise erfolgen. Beispielsweise kann eine Kamera im Innenraum des Kraftfahrzeugs den Fahrer anhand seines Gesichts oder anhand biometrischer Merkmale erkennen. Ferner kann jedem Fahrer ein bestimmter Schlüssel zugeordnet sein, welcher die Identität des Fahrers per Funk an die Identifikationseinrichtung 5 überträgt.

Die Anzeigevorrichtung 2, das Fahrerassistenzsystem 3 und die Identifikationseinrichtung 5 sind mit einer Auswerteeinrichtung 6 datentechnisch gekoppelt. Die Auswerteeinrichtung 6 empfängt von dem Fahrerassistenzsystem 3 alle für die Sicherheit beim Führen des Kraftfahrzeugs relevanten Parameter. Die Übertragung dieser Parameter erfolgt kontinuierlich, so dass die Auswerteeinrichtung 6 jede Änderung dieser Parameter erfassen kann. Die Identifikationseinrichtung 5 überträgt Daten zu der Person des derzeitigen Fahrers an die Auswerteeinrichtung 6.

Anhand der von dem Fahrerassistenzsystem 3 erfassten Parametern bestimmt die Auswerteeinrichtung 6 einen Sicherheitslevel, der für ein Zeit- oder Streckenintervall angibt, wie sicher der Fahrer des Kraftfahrzeugs gefahren ist. Die Art und Weise wie der Sicherheitslevel bestimmt wird, wird später mit Bezug zu dem Ausführungsbeispiel des erfindungsgemäßen Verfahrens erläutert. Der aktuelle Sicherheitslevel wird dann mittels der Anzeigevorrichtung 2 in Innenraum des Kraftfahrzeugs für den Fahrer sichtbar angezeigt.

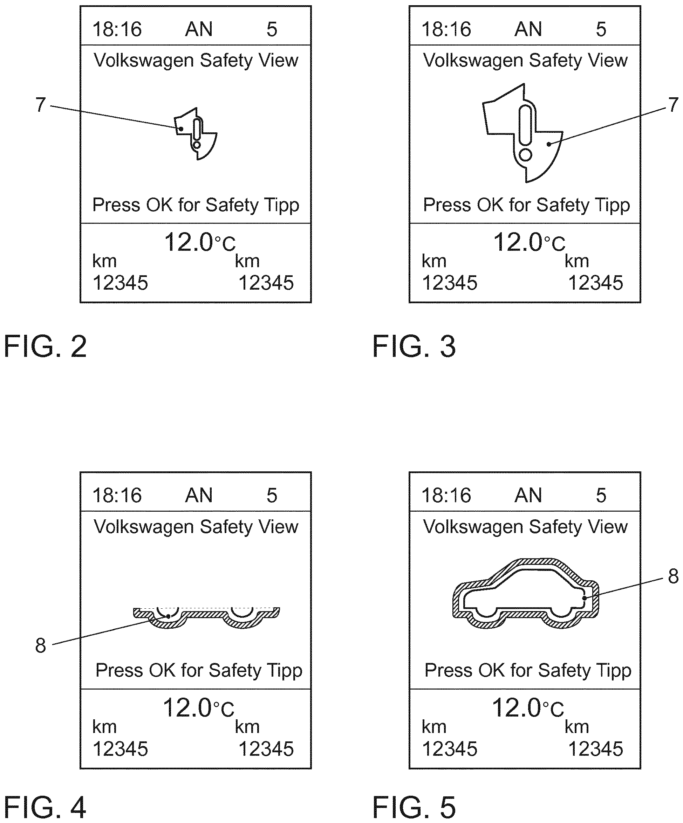

In den Figuren 2 und 3 ist ein erstes Beispiel für eine solche Anzeige wiederergeben. Es wird ein Symbol 7 angezeigt, dessen Größe den Wert des aktuellen Sicherheitslevels angibt. Ist das Symbol kleiner, wie in Fig. 4 gezeigt, ist der Sicherheitslevel niedriger, ist das Symbol größer, wie in Fig. 3 gezeigt, ist der Sicherheitslevel höher.

In den Figuren 4 und 5 ist ein weiteres Beispiel für die Anzeige des Sicherheitslevels gezeigt. In diesem Fall füllt sich mit zunehmendem Sicherheitslevel das Symbol 8, welches in diesem Fall den Umriss eines Fahrzeugs darstellt, auf.

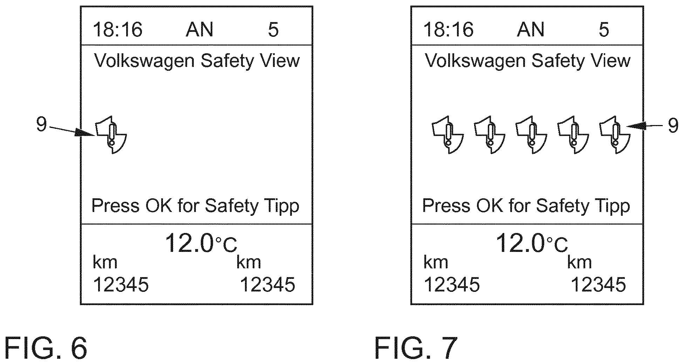

In den Figuren 6 und 7 ist ein noch weiteres Beispiel für die Anzeige des Sicherheitslevels gezeigt. In diesem Fall umfasst das Symbol 9 mehrere Teilsymbole. Die Anzahl der wiedergegebenen Teilsymbole in dem Symbol 9 gibt den Wert des Sicherheitslevels wieder.

Im Folgenden wird ein Ausführungsbeispiel des erfindungsgemäßen Informationsverfahrens erläutert:
Zu Beginn einer Fahrt erfasst die Identifikationseinrichtung 5 die Person des Fahrers, nachdem dieser in das Kraftfahrzeug eingestiegen ist, jedoch noch bevor der Motor gestartet wurde. Daten zur Identität das Fahrers werden von der Identifikationseinrichtung 5 an die Auswerteeinrichtung 6 übertragen. Die Auswerteeinrichtung 6 setzt zu Beginn der Fahrt den Sicherheitslevel für diesen Fahrer auf den Wert Null. Nachdem der Motor gestartet wurde und die Fahrt begonnen hat, erfasst die Auswerteeinrichtung 6 kontinuierlich die gefahrene Zeit und die zurückgelegte Strecke. Des Weiteren werden der Auswerteeinrichtung 6 kontinuierlich Daten von dem Fahrerassistenzsystem 3 übertragen. Anhand dieser Daten bestimmt die Auswerteeinrichtung 6 sicherheitsrelevante Parameter. Anhand der sicherheitsrelevanten Parameter wird dann ermittelt, ob ein Gefahrsituation vorlag, und falls dies der Fall war, die Größe der Gefahr der Gefahrsituation. Unter welchen Umständen eine anhand der sicherheitsrelevanten Parameter ermittelten Verkehrssituation als Gefahrsituation bewertet wird. Entsprechende Grenzwerte für die sicherheitsrelevanten Parameter sind in der Auswerteeinrichtung 6 gespeichert.

Folgende Verkehrssituationen, die anhand der von dem Fahrerassistenzsystem 3 übertragenen Daten ermittelt werden, werden als Gefahrsituation erfasst, wobei die folgende Aufzählung nur beispielhaft ist:
Wenn ein bestimmter Sicherheitsabstand unterschritten wird, wird dies als Gefahrsituation bewertet. Zur Bestimmung des Sicherheitsabstands wird die Geschwindigkeit des Fahrzeugs und der Abstand zu einem vorausfahrenden Fahrzeug berücksichtigt. Für jeden Geschwindigkeitswert kann beispielsweise ein bestimmter Wert für den erforderlichen Sicherheitsabstand in der Auswerteeinrichtung 6 gespeichert sein. Wenn bei einer bestimmten Geschwindigkeit dieser Wert unterschritten wird, wird diese als Gefahrsituation bewertet. Die Größe der Gefahr dieser Gefahrsituation ergibt sich aus dem Maß, um welches der Sicherheitsabstand unterschritten wird.

Ein überhöhtes Auffahren bei einem Überholvorgang wird als Gefahrsituation bewertet. Hierfür wird der Abstand zu einem vorausfahrenden Fahrzeug und die Relativgeschwindigkeit zu diesem vorausfahrenden Fahrzeug sowie gegebenenfalls ein Bild einer Kamera berücksichtigt.

Ein Spurwechsel ohne Betätigung des Fahrtrichtungsanzeigers wird als Gefahrsituation bewertet. Anhand der Bilder einer Kamera wird erfasst, dass ein Spurwechsel vollzogen worden ist. Mittels eines Sensors 4 wird gleichzeitig erfasst, ob der Fahrtrichtungsanzeiger betätigt wurde. War dies bei einem Spurwechsel nicht der Fall, wird dies als Gefahrsituation eingestuft. Ein Fahren ohne Waschwasser wird als Gefahrsituation bewertet. Hierfür werden die Messwerte des Füllstandsensors für das Waschwasser berücksichtigt.

Ein Fahren trotz eines Fehlers im Fahrzeugstatus wird als Gefahrsituation erfasst. Der Fahrzeugstatus wird über die Fehlerspeicher der Steuergeräte des Kraftfahrzeugs erkannt. Liegt beispielsweise ein Fehler in der Bremsanlage des Kraftfahrzeugs vor, wird dies an die Auswerteeinrichtung 6 übertragen. Fährt der Fahrer trotzt dieser Fehlermeldung, stellt dies eine Gefahrsituation dar.

Falls die zulässige Höchstgeschwindigkeit überschritten wird, wird dies als Gefahrsituation erfasst. Die Größe, um welche die zulässige Höchstgeschwindigkeit überschritten wird, bestimmt die Größe der Gefahr dieser Gefahrsituation. Die zulässige Höchstgeschwindigkeit wird dabei mittels einer Verkehrszeichenerkennung oder mittels Daten des Navigationssystems des Kraftfahrzeugs erkannt.

Gleichermaßen wird das Überfahren eines Verkehrszeichens, wie eine rote Ampel oder ein Stoppschild, als Gefahrsituation bewertet. Auch in diesem Fall wird das Verkehrszeichen oder Verkehrszeichenerkennung oder mittels Daten des Navigationssystems erfasst.

Wenn an einem Zebrastreifen wartende Fußgänger nicht beachtet werden, wird dies als Gefahrsituation bewertet. Der Zebrastreifen und die Position des Fußgängers werden mittels der Kamera und gegebenenfalls einer Verkehrszeichenerkennung erfasst. Auch ein zu enges Anfahren von Fußgängern wird als Gefahrsituation erfasst. Die Fußgängererkennung erfolgt auch in diesem Fall mittels der Bilder der Kamera.

Als weitere Gefahrsituation wird das Fahren ohne Anlegen des Sicherheitsgurtes bewertet. Hierfür wird der Status des Sicherheitsgurtes mittels eines Sensors 4 erfasst.

Auch ein Fahren mit einer nicht geschlossenen Tür wird als Gefahrsituation bewertet. Ein Türkontaktsensor erfasst hierfür den Zustand der Tür.

Des Weiteren wird eine zu lange Fahrt oder eine zu große Fahrtstrecke ohne Pause als Gefahrsituation erfasst. Die Situation wird dadurch erfasst, dass die Länge der Fahrtstrecke oder die Fahrdauer ohne Unterbrechung detektiert wird. Des Weiteren können die Sensoren 4 einen Müdigkeitssensor umfassen. Dieser Müdigkeitssensor kann beispielsweise das Bewegungsmuster der Fahrt analysieren. Ferner ist es möglich, das Lenkverhalten oder Merkmale des Gesichts des Fahrers zu analysieren, um eine zu hohe Müdigkeit des Fahrers zu erkennen.

Die Fahrt wird von der Auswerteeinrichtung 6 in Teilstreckenintervalle oder Teilzeitintervalle unterteilt. Wenn in einem solchen Teilintervall keine Gefahrsituation aufgetreten ist, wird der Wert des Sicherheitslevels erhöht. Mit jedem Teilintervall, in dem keine Gefahrsituation aufgetreten ist, wird der Sicherheitslevel kumulativ weiter erhöht. Dies wird wie in den Figuren 2 bis 7 dargestellt, durch eine Vergrößerung eines Symbols 7, ein Auffüllen eines Symbols 8 oder durch die Anzahl von Teilsymbolen in einem Symbol 9 auf der Anzeigevorrichtung 2 angezeigt.

Wenn hingegen in einem Teilintervall eine Gefahrsituation aufgetreten ist, wird der Wert des Sicherheitslevels erniedrigt und die Anzeige auf der Anzeigevorrichtung 2 entsprechend verändert. Das Maß, um den der Sicherheitslevel erniedrigt wird, hängt außerdem von der Größe der Gefahr einer Gefahrsituation ab. Wenn die Größe der Gefahr der Gefahrsituation besonders groß war, ist auch das Maß der Erniedrigung des Sicherheitslevels besonders groß. Wenn die Auswerteeinrichtung 6 detektiert, dass das Kraftfahrzeug steht, werden von der Anzeigevorrichtung 2 Hinweise zu den letzten Gefahrsituationen angezeigt. Ferner werden Hinweise angezeigt, wie diese Gefahrsituationen in Zukunft vermieden werden können. Beispielsweise wird der Hinweis angezeigt: "Sicherheitsabstand einhalten".

Wenn der Fahrer die Fahrt beendet hat und den Motor ausstellt, verschwindet die Anzeige des Sicherheitslevels und der Sicherheitslevel wird wieder auf den Wert Null zurückgesetzt.

Alternativ kann das Zurücksetzen des Sicherheitslevels für einen bestimmten Fahrer auch erst nach dem Ende einer Navigationsroute oder erst beim nächsten Tanken erfolgen. Den Zeitpunkt des Zurücksetzens des Sicherheitslevels kann der Fahrer gegebenenfalls auch manuell einstellen.

Wenn während eines solchen Zeitintervalls der Fahrer des Kraftfahrzeugs wechselt, wird dies mittels der Identifikationseinrichtung 5 erkannt. Die Auswerteeinrichtung 6 zeigt dann immer den Sicherheitslevel auf der Anzeigevorrichtung 2 an, der dem aktuellen Fahrer zugeordnet ist. Außerdem kann angezeigt werden, wann das aktuelle Zeitintervall begonnen wurde.

## Patentansprüche

1. Informationsverfahren für den Fahrer eines Kraftfahrzeugs, bei dem
mittels zumindest eines Fahrerassistenzsystems (3) sicherheitsrelevante Parameter beim Fahren des Kraftfahrzeugs erfasst werden,
aus den erfassten Parametern ein Sicherheitslevel bestimmt wird, der für ein Zeit- oder Streckenintervall angibt, wie sicher der Fahrer des Kraftfahrzeugs gefahren ist, wobei mittels der Parameter Gefahrsituationen erfasst werden, wobei für die sicherheitsrelevanten Parameter Grenzwerte gespeichert sind, die festlegen, unter welchen Umständen eine anhand der sicherheitsrelevanten Parameter ermittelte Verkehrssituation als Gefahrsituation bewertet wird, und
der aktuelle Sicherheitslevel angezeigt wird,
**dadurch gekennzeichnet, dass**
ein Stehen des Kraftfahrzeugs erfasst wird und, wenn erfasst worden ist, dass das Kraftfahrzeug steht, dem Fahrer Informationen zu zumindest einer vergangenen erfassten Gefahrsituation ausgegeben werden, und zwar selbst dann, wenn ein Fahrerassistenzsystem noch nicht in das Fahrgeschehen eingegriffen hat oder eine Warnung ausgegeben hat.

2. Informationsverfahren nach Anspruch 1,
**dadurch gekennzeichnet, dass**
als sicherheitsrelevanter Parameter der Abstand des Kraftfahrzeugs von anderen Verkehrsteilnehmern und/oder Objekten erfasst wird.

3. Informationsverfahren nach Anspruch 1 oder 2,
**dadurch gekennzeichnet, dass**
als sicherheitsrelevanter Parameter der Füllstand von Betriebsflüssigkeiten und/oder Fehlern eines Fahrzeugstatus erfasst wird.

4. Informationsverfahren nach einem der vorhergehenden Ansprüche,
**dadurch gekennzeichnet, dass**
für die Fahrt gültige Verkehrszeichen und das Befolgen der diesen Verkehrszeichen entsprechenden Regeln als sicherheitsrelevanter Parameter erfasst wird.

5. Informationsverfahren nach einem der vorhergehenden Ansprüche,
**dadurch gekennzeichnet, dass**
die Dauer einer Fahrstrecke ermittelt wird, die ohne eine Pause zurückgelegt worden ist, und ein Überschreiten einer Höchstdauer als sicherheitsrelevanter Parameter erfasst wird.

6. Informationsverfahren nach einem der vorhergehenden Ansprüche,
**dadurch gekennzeichnet, dass**
der Sicherheitslevel erhöht wird, wenn in einem Teilzeit- oder Teilstreckenintervall keine Gefahrsituation erfasst worden ist.

7. Informationsverfahren nach einem der vorhergehenden Ansprüche,
**dadurch gekennzeichnet, dass**
der Sicherheitslevel erniedrigt wird, wenn in einem Teilzeit- oder Teilstreckenintervall eine Gefahrsituation erfasst worden ist.

8. Informationsverfahren nach einem der vorhergehenden Ansprüche,
**dadurch gekennzeichnet, dass**
mittels der Parameter die Größe der Gefahr einer Gefahrsituation erfasst wird und das Maß der Erniedrigung des Sicherheitslevels von der Größe der Gefahr einer erfassten Gefahrsituation abhängt.

9. Informationsverfahren nach einem der vorhergehenden Ansprüche,
**dadurch gekennzeichnet, dass**
eine Veränderung des Sicherheitslevels durch eine Veränderung der Größe eines Symbols (7) angezeigt wird.

10. Informationssystem (1) für den Fahrer eines Kraftfahrzeugs mit zumindest einem Fahrerassistenzsystem (3) zum Erfassen sicherheitsrelevanter Parameter beim Fahren des Kraftfahrzeugs,
mit einer Auswerteeinrichtung (6), die mit dem zumindest einem Fahrerassistenzsystem (3) gekoppelt ist, zum Bestimmen eines Sicherheitslevels aus den erfassten Parametern, wobei der Sicherheitslevel für ein Zeit- oder Streckenintervall angibt, wie sicher der Fahrer das Kraftfahrzeug gefahren ist, und
wobei die Auswerteeinrichtung (6) ausgebildet ist, für die sicherheitsrelevanten Parameter Grenzwerte zu speichern, die festlegen, unter welchen Umständen eine anhand der sicherheitsrelevanten Parameter ermittelte Verkehrssituation als Gefahrsituation bewertet wird und mittels der Parameter Gefahrsituationen zu erfassen, und
eine Anzeigevorrichtung (2), die mit der Auswerteeinrichtung (6) gekoppelt ist, zum Anzeigen des aktuellen Sicherheitslevels,
**dadurch gekennzeichnet, dass**
die Auswerteeinrichtung (6) ausgebildet ist, ein Stehen des Kraftfahrzeugs zu erfassen und, wenn erfasst worden ist, dass das Kraftfahrzeug steht, dem Fahrer Informationen zu zumindest einer vergangenen erfassten Gefahrsituation auszugeben, und zwar selbst dann, wenn das Fahrerassistenzsystem noch nicht in das Fahrgeschehen eingegriffen hat oder eine Warnung ausgegeben hat.

11. Informationssystem (1) nach Anspruch 10,
**dadurch gekennzeichnet, dass**
das Fahrerassistenzsystem (3) zumindest einen Sensor (4) zum Erfassen des Abstands des Kraftfahrzeugs von anderen Verkehrsteilnehmern und/oder Objekten umfasst und die Auswerteeinrichtung (6) ausgebildet ist, den Sicherheitslevel zumindest zum Teil aus den erfassten Abständen zu bestimmen.

12. Informationssystem (1) nach Anspruch 10 oder 11,
**dadurch gekennzeichnet, dass**
das Fahrerassistenzsystem zumindest einen Sensor (4) zum Erfassen des Füllstands von Betriebsflüssigkeiten und/oder eine Einheit zum Erfassen von für die Fahrt gültigen Verkehrszeichen umfasst und die Auswerteeinrichtung (6) ausgebildet ist, den Sicherheitslevel zumindest zum Teil aus den erfassten Füllständen und/oder den erfassten Verkehrszeichen zu bestimmen.

13. Informationssystem (1) nach einem der Ansprüche 10 bis 12,
**dadurch gekennzeichnet, dass**
das Informationssystem (1) eine Identifikationseinrichtung (5) zum Erfassen der Person des Fahrers des Kraftfahrzeugs umfasst und dass die Auswerteeinrichtung (6) ausgebildet ist, den Sicherheitslevel fahrerspezifisch zu erfassen.

## Claims

1. Information method for the driver of a motor vehicle, in which
safety-relevant parameters are detected by way of at least one driver assistance system (3) during driving of the motor vehicle,
a safety level is determined from the detected parameters, which safety level indicates, for a time or distance interval, how safely the driver of the motor vehicle has driven, wherein the parameters are used to detect hazardous situations, wherein limit values are stored for the safety-relevant parameters, these limit values defining the circumstances under which a traffic situation ascertained on the basis of the safety-relevant parameters is assessed as a hazardous situation, and
the current safety level is displayed,
**characterized in that**
a stationary state of the motor vehicle is detected and, when it has been detected that the motor vehicle is stationary, information about at least one previous detected hazardous situation is output to the driver, specifically even when a driver assistance system has not yet intervened in the traffic situation or output a warning.

2. Information method according to Claim 1,
**characterized in that**
the distance of the motor vehicle from other road users and/or objects is detected as safety-relevant parameter.

3. Information method according to Claim 1 or 2,
**characterized in that**
the fill level of operating fluids and/or faults with a vehicle status is detected as safety-relevant parameter.

4. Information method according to one of the preceding claims,
**characterized in that**
road signs applicable to the journey and the following of rules corresponding to these road signs is detected as safety-relevant parameter.

5. Information method according to one of the preceding claims,
**characterized in that**
the duration of a journey that has been taken without a break is ascertained, and exceedance of a maximum duration is detected as safety-relevant parameter.

6. Information method according to one of the preceding claims,
**characterized in that**
the safety level is raised when no hazardous situation has been detected within a partial time or partial distance interval.

7. Information method according to one of the preceding claims,
**characterized in that**
the safety level is lowered when a hazardous situation has been detected within a partial time or partial distance interval.

8. Information method according to one of the preceding claims,
**characterized in that**
the magnitude of the danger of a hazardous situation is detected by way of the parameters and the extent of the lowering of the safety level is dependent on the magnitude of the danger of a detected hazardous situation.

9. Information method according to one of the preceding claims,
**characterized in that**
a change in the safety level is displayed through a change in the size of a symbol (7).

10. Information system (1) for the driver of a motor vehicle, having at least one driver assistance system (3) for detecting safety-relevant parameters during driving of the motor vehicle,
having an evaluation unit (6), coupled to the at least one driver assistance system (3), for determining a safety level from the detected parameters, wherein the safety level indicates, for a time or distance interval, how safely the driver has driven the motor vehicle, and wherein the evaluation unit (6) is designed to store limit values for the safety-relevant parameters, these limit values defining the circumstances under which a traffic situation ascertained on the basis of the safety-relevant parameters is assessed as a hazardous situation and to detect hazardous situations by way of the parameters, and
a display device (2), coupled to the evaluation unit (6), for displaying the current safety level,
**characterized in that**
the evaluation unit (6) is designed to detect a stationary state of the motor vehicle and, when it has been detected that the motor vehicle is stationary, to output information about at least one previous detected hazardous situation to the driver, specifically even when the driver assistance system has not yet intervened in the traffic situation or output a warning.

11. Information system (1) according to Claim 10,
**characterized in that**
the driver assistance system (3) comprises at least one sensor (4) for detecting the distance of the motor vehicle from other road users and/or objects, and the evaluation unit (6) is designed to determine the safety level at least partially from the detected distances.

12. Information system (1) according to Claim 10 or 11,
**characterized in that**
the driver assistance system comprises at least one sensor (4) for detecting the fill level of operating fluids and/or a unit for detecting road signs applicable to the journey and the evaluation unit (6) is designed to determine the safety level at least partially from the detected fill levels and/or the detected road signs.

13. Information system (1) according to one of Claims 10 to 12,
**characterized in that**
the information system (1) comprises an identification unit (5) for detecting the person driving the motor vehicle and that the evaluation unit (6) is designed to detect the safety level in a manner specific to the driver.

## Revendications

1. Procédé d'information du conducteur d'un véhicule automobile, procédé dans lequel
des paramètres importants pour la sécurité sont détectés lors de la conduite du véhicule automobile au moyen d'au moins un système d'aide à la conduite (3),
un niveau de sécurité est déterminé à partir des paramètres détectés, lequel niveau de sécurité indique pendant un intervalle de temps ou de distance la sécurité avec laquelle le conducteur du véhicule automobile conduit, des situations dangereuses étant détectées au moyen des paramètres, des valeurs limites étant mémorisées pour les paramètres importants pour la sécurité, lesquelles valeurs limites définissent des circonstances dans lesquelles une situation de circulation, déterminée sur la base des paramètres importants pour la sécurité, est évaluée comme situation dangereuse, et
le niveau de sécurité actuel est affiché,
**caractérisé en ce que**
un arrêt du véhicule automobile est détecté et, s'il a été détecté que le véhicule automobile est à l'arrêt, des informations sur au moins une situation dangereuse précédemment détectée sont délivrées au conducteur, même si un système d'aide à la conduite n'est pas encore intervenu dans la conduite ou a délivré un avertissement.

2. Procédé d'information selon la revendication 1,
**caractérisé en ce que**
la distance entre le véhicule automobile et les autres usagers de la route et/ou des objets est détectée comme paramètre important pour la sécurité.

3. Procédé d'information selon la revendication 1 ou 2,
**caractérisé en ce que**
le niveau de liquides de fonctionnement et/ou d'erreurs d'un état de véhicule est détecté comme paramètre important pour la sécurité.

4. Procédé d'information selon l'une des revendications précédentes,
**caractérisé en ce que**
des panneaux de signalisation valables pour le trajet et le respect des règles correspondant à ces panneaux de signalisation sont détectés comme paramètres importants pour la sécurité.

5. Procédé d'information selon l'une des revendications précédentes,
**caractérisé en ce que**
la durée d'un itinéraire qui a été parcouru sans interruption est déterminée et un dépassement d'une durée maximale est détecté comme paramètre important pour la sécurité.

6. Procédé d'information selon l'une des revendications précédentes,
**caractérisé en ce que**
le niveau de sécurité est augmenté si aucune situation dangereuse n'a été détectée dans une partie d'intervalle de temps ou de distance.

7. Procédé d'information selon l'une des revendications précédentes,
**caractérisé en ce que**
le niveau de sécurité est abaissé si une situation dangereuse a été détectée dans une partie d'intervalle de temps ou de distance.

8. Procédé d'information selon l'une des revendications précédentes,
**caractérisé en ce que**
l'importance du danger d'une situation dangereuse est détectée au moyen des paramètres et l'étendue de l'abaissement du niveau de sécurité dépend de l'importance du danger d'une situation dangereuse détectée.

9. Procédé d'information selon l'une des revendications précédentes,
**caractérisé en ce que**
une variation du niveau de sécurité est indiquée par une variation de la taille d'un symbole (7).

10. Système (1) d'information du conducteur d'un véhicule automobile, ledit système d'information comprenant
au moins un système d'aide à la conduite (3) destiné à détecter des paramètres importants pour la sécurité lors de la conduite du véhicule automobile,
un moyen d'évaluation (6) qui est couplé à l'au moins un système d'aide à la conduite (3) pour déterminer un niveau de sécurité à partir des paramètres détectés, le niveau de sécurité indiquant la sécurité avec laquelle le conducteur conduit le véhicule automobile pendant un intervalle de temps ou de distance, et
le moyen d'évaluation (6) étant conçu pour mémoriser, pour les paramètres importants pour la sécurité, des valeurs limites qui déterminent les circonstances dans lesquelles une situation de circulation, déterminée sur la base des paramètres importants pour la sécurité, est évaluée comme situation dangereuse, et pour détecter des situations dangereuses au moyen des paramètres, et
un dispositif d'affichage (2) couplé au moyen d'évaluation (6) pour afficher le niveau de sécurité actuel,
**caractérisé en ce que**
le moyen d'évaluation (6) est conçu pour détecter un arrêt du véhicule automobile et, s'il a été détecté que le véhicule automobile est à l'arrêt, pour fournir au conducteur des informations sur au moins une situation dangereuse précédemment détectée, même si le système d'aide à la conduite n'est pas encore intervenu dans la conduite ou a délivré un avertissement.

11. Système d'information (1) selon la revendication 10,
**caractérisé en ce que**
le système d'aide à la conduite (3) comprend au moins un capteur (4) destiné à détecter la distance entre le véhicule automobile et d'autres usagers de la route et/ou des objets et le moyen d'évaluation (6) est conçu pour déterminer le niveau de sécurité au moins en partie à partir des distances détectées.

12. Système d'information (1) selon la revendication 10 ou 11,
**caractérisé en ce que**
le système d'aide à la conduite comprend au moins un capteur (4) destiné à détecter le niveau des liquides de fonctionnement et/ou une unité destinée à détecter des panneaux de signalisation valables pour le trajet et le moyen d'évaluation (6) est conçu pour déterminer le niveau de sécurité au moins en partie à partir des niveaux détectés et/ou des panneaux de signalisation détectés.

13. Système d'information (1) selon l'une des revendications 10 à 12,
**caractérisé en ce que**
le système d'information (1) comprend un moyen d'identification (5) destiné à détecter la personne du conducteur du véhicule automobile et **en ce que** le moyen d'évaluation (6) est conçu pour détecter le niveau de sécurité d'une manière spécifique au conducteur.
